# EUROPÄISCHE PATENTSCHRIFT

(11) **EP 3 553 374 B1**
(45) Veröffentlichungstag und Bekanntmachung des Hinweises auf die Patenterteilung: **28.08.2024**
(21) Anmeldenummer: 19166963.9
(22) Anmeldetag: 03.04.2019
(51) Int. Cl.: F21V 23/04

(54) **HALBLEITERBASIERTE BELEUCHTUNGSVORRICHTUNG**
SEMICONDUCTOR-BASED LIGHTING DEVICE
DISPOSITIF D'ÉCLAIRAGE À BASE DE SEMI-CONDUCTEUR

(30) Priorität: 09.04.2018 DE 102018108278
(43) Veröffentlichungstag der Anmeldung: 16.10.2019
(73) Patentinhaber: SCHOTT AG, 55122 Mainz (DE)
(72) Erfinder: WÖLFING, Bernd, 55122 Mainz (DE); REICHERT, Thomas, 55263 Wackernheim (DE); WEIL, Achim, 67308 Immesheim (DE); JURK, Andreas, 67592 Flörsheim-Dalsheim (DE); BLEISINGER, Björn, 55499 Riesweiler (DE)
(74) Vertreter: Blumbach · Zinngrebe Patentanwälte PartG mbB

(56) Entgegenhaltungen:
- WO-A1-02/06723
- WO-A2-2007/072316
- DE-A1- 102006 048 711
- DE-A1- 102015 203 890
- DE-B3- 10 251 133
- GB-A- 2 473 311
- JP-A- 2011 222 182
- US-A1- 2013 250 590
- US-A1- 2016 123 564

## Beschreibung

Die Erfindung betrifft allgemein halbleiterbasierte Beleuchtungseinrichtungen. Insbesondere betrifft die Erfindung Leuchten mit einem räumlich veränderlichen Lichtfeld.

Hinsichtlich des zu beleuchtenden Orts einstellbare Leuchten werden insbesondere als Leseleuchten eingesetzt. Hier sollte die Beleuchtungsrichtung und damit der zu beleuchtende Ort leicht einstellbar sein, um einerseits eine lokale Beleuchtung bereitzustellen, andererseits auf wechselnde Positionen des Nutzers anpassbar zu sein. Um dies zu erreichen, werden die Leuchten mit einem beweglichen Kopf ausgerüstet, der eine Schwenkung des von der Leuchte erzeugten Lichtkegels gestattet. Eine solche Leselampe ist beispielsweise in der EP 2 439 105 A2 beschrieben. Diese Leselampe weist eine Lichtquelle und einen bewegbaren Deckel auf, an welchem die Lichtquelle befestigbar ist. Durch Betätigen eines Stellelements sind der Deckel und die Lichtquelle um die Längsachse der Leselampe und durch Betätigen des Deckels um eine senkrecht zur Längsachse verlaufende Querachse bewegbar. Generell besteht bei einer Bewegung der Lichtquelle der Nachteil, dass die dazu eingesetzten mechanischen Elemente einem Verschleiß unterliegen oder einen gewissen Wartungsaufwand erfordern.

Eine andere Lösung sieht die DE 10 2008 055 812 B4 vor. Diese beschreibt ein Überkopf-Leseleuchtensystem für einen Passagiersitz. Die Leseleuchte weist eine ersten Mehrzahl von unbeweglichen Lichtquellen deren Mittelachsen in einer ersten Ebene liegen und zueinander geneigt sind und eine zweite Mehrzahl von Lichtquellen, deren Mittelachsen in einer zweiten Ebene liegen und zueinander geneigt sind, die zweite Reihe parallel zu der ersten Reihe ist, wobei eine Ansteuerungseinrichtung mit der ersten und zweiten Mehrzahl von Lichtquellen verbunden und dazu eingerichtet ist, wahlweise jeweils eine der Lichtquellen anzusteuern. Eine Erfassungsvorrichtung zum Erfassen einer Position des Passagiersitzes ist vorgesehen, wobei die Ansteuerungseinrichtung wahlweise eine der Lichtquellen in Abhängigkeit von der von der Erfassungsvorrichtung erfassten Position des Passagiersitzes automatisch ansteuert. Eine derartige Anordnung erfordert eine große Anzahl von Lichtquellen, die zum größten Teil nicht genutzt werden. Die Anordnung ist dementsprechend vergleichsweise groß und aufwändig. Weitere Lösungen sind bekannt aus DE 10 2015 203890 A1 und DE 102 51 133 B3.

Der Erfindung liegt daher die Aufgabe zugrunde, eine Beleuchtungseinrichtung nach Anspruch 1 anzugeben, die kompakt und wenig anfällig, beziehungsweise wartungsarm ist und eine einfache Ausrichtung des Beleuchtungsfelds, beziehungsweise Lichtfeldes gestattet. Diese Aufgabe wird durch den Gegenstand der unabhängigen Ansprüche gelöst. Vorteilhafte Ausgestaltungen der Erfindung sind in den abhängigen Ansprüchen angegeben.

Demgemäß sieht die Erfindung eine Beleuchtungsvorrichtung mit einer Lichtquellenanordnung mit mehreren halbleiterbasierten Lichtquellen in Form von Leuchtdioden vor, welche so kollimiert sind, dass diese jeweils Licht in unterschiedlich gerichtete Lichtkegel emittieren, derart, dass benachbarte Lichtkegel überlappen, und wobei die Beleuchtungsvorrichtung eine Stelleinrichtung zur Abgabe eines Stellsignals für die Einstellung der Beleuchtungsrichtung und eine Ansteuerschaltung aufweist, welche mit der Stelleinrichtung verbunden ist, wobei mit der Stelleinrichtung Zwischenstufen einstellbar sind, bei welchen die Leuchdioden benachbarter und überlappender Lichtkegel von der Ansteuerschaltung gemeinsam und in variierender Lichtintensität so betreibbar sind, dass die Mittenachse, beziehungsweise der Schwerpunkt des von den Leuchtdioden erzeugten Lichtfelds bei den Zwischenstufen jeweils zwischen den Mittenachsen, beziehungsweise Schwerpunkten benachbarter Lichtkegel liegt.

Die Leuchtdioden einer erfindungsgemäßen Beleuchtungseinrichtung werden demgemäß nicht diskret ein- oder ausgeschaltet, um eine bestimmte Beleuchtungsrichtung, beziehungsweise die Ausleuchtung eines vorgesehenen Bereichs zu erzielen. Vielmehr werden benachbarte Lichtfelder mit unterschiedlicher Intensität überlagert, um insgesamt ein Lichtfeld zu erhalten, welches örtlich oder richtungsmäßig zwischen benachbarten Lichtfeldern einzeln betriebener, in unterschiedliche Richtung strahlender Leuchtdioden liegt. Auf diese Weise kann bereits mit einer relativ geringen Anzahl von Leuchtdioden eine kontinuierliche oder wenigstens quasikontinuierliche Ausrichtung der Beleuchtungsrichtung erreicht werden. Die Beleuchtungsvorrichtung kann bevorzugt als Leseleuchte ausgebildet sein,

Der Begriff "kollimiert" bezeichnet im Sinne dieser Offenbarung keine strenge Parallelrichtung, die ohnehin nur mit idealen punktförmigen Lichtquellen theoretisch möglich wäre, sondern allgemein die Erzeugung gerichteten Lichts, nämlich von Licht, das in besagten Lichtkegel abgegeben wird. In dieser Offenbarung wird der Begriff "kollimiert" daher auch synonym mit dem Begriff "gerichtet" oder "gebündelt" verwendet. Demgemäß kann die Beleuchtungsvorrichtung gemäß dieser Offenbarung auch wie folgt beschrieben werden: Es ist eine Beleuchtungsvorrichtung mit einer Lichtquellenanordnung mit mehreren halbleiterbasierten Lichtquellen in Form von Leuchtdioden vorgesehen, deren emittiertes Licht so gebündelt wird, dass es unterschiedlich gerichtete Lichtkegel bildet, die sich in einem Lichtfeld überlappen, wobei die Beleuchtungsvorrichtung eine Stelleinrichtung zur Abgabe eines Stellsignals für die Einstellung der Beleuchtungsrichtung und eine Ansteuerschaltung aufweist, welche mit der Stelleinrichtung verbunden ist, wobei mit der Stelleinrichtung Zwischenstufen einstellbar sind, bei welchen Leuchtdioden benachbarter und überlappender Lichtkegel von der Ansteuerschaltung gemeinsam und in variierbarer Lichtintensität so betreibbar sind, dass der Schwerpunkt des von den Leuchtdioden erzeugten Lichtfelds bei den Zwischenstufen zwischen den Schwerpunkten benachbarter Lichtkegel liegt.

Für die Beleuchtungseinrichtung kann also in bevorzugter Weise auch bei ortsfesten Lichtkegeln eine räumliche Einstellung des Ausleuchtungsbereichs durch Variation der Helligkeit der einzelnen Lichtkegel in den Zwischenstufen erfolgen. Mit der Einstellung kann auch ein räumlich fixes, beziehungsweise ortsfestes Lichtfeld eingestellt werden, wobei diese Einstellungen nach Vorgabe, beispielsweise bei einer Konfiguration der Beleuchtungseinrichtung veränderbar sind. Gemäß einer Ausführungsform wird dazu die Beleuchtungseinrichtung vor einer Nutzung, beispielsweise als Leseleuchte so konfiguriert, dass diese einen bestimmten Bereich fest ausleuchtet. In einfachster Ausgestaltung braucht dann auch kein für den Nutzer zugängliches Bedienelement zur Bewegung des Lichtfelds vorgesehen sein.

Diese räumliche Einstellung kann aber auch eine Bewegung, insbesondere eine Schwenkung des Lichtfelds umfassen.

Jedenfalls wird die Bewegung des Lichtfelds vorzugsweise nicht, oder zumindest nicht alleine durch Schwenkung eines oder mehrerer Lichtkegel, sondern vielmehr durch eine Helligkeitseinstellung bewirkt. Es ist also vorgesehen, dass die Lichtquellen jeweils in einen unbeweglichen Lichtkegel Licht abstrahlen und vorzugsweise ortsfest angeordnet sind.

Denkbar wäre etwa, die gewünschte Position, beziehungsweise Richtung des Lichtfelds in einer Form von Koordinaten, beispielsweise als Zahl innerhalb eines die verschiedenen Richtungen repräsentierenden Zahlenbereichs in die Stelleinrichtung einzugeben. Eine besonders intuitive Bedienung kann aber erzielt werden, wenn die Stelleinrichtung und die Ansteuerschaltung so zusammenwirken, dass mit einer sukzessiven Betätigung des Stellmittels sich der Schwerpunkt des Lichtfelds bewegt, beispielsweise geradlinig in eine Richtung. Eine weitere, besonders bevorzugte Möglichkeit ist, eine Stelleinrichtung vorzusehen, die eine Schiebe- oder Dreheinstelleinrichtung umfasst, wobei die Stelleinrichtung und die Ansteuerschaltung so zusammenwirken, dass verschiedenen Schiebe- oder Drehstellungen der Schiebe- oder Dreheinstelleinrichtung mit verschiedenen Beleuchtungsrichtungen korrespondieren.

Nicht nur die Position des von der Beleuchtungseinrichtung beleuchteten Bereichs soll sich in Zwischenpositionen zwischen den Positionen der Lichtflecken, beziehungsweise ausgeleuchteten Bereiche mittels der Erfindung möglichst gleichmäßig bewegen lassen. Auch wäre es dabei wünschenswert, wenn die Einstellung verschiedener Positionen möglichst ohne merkliche Helligkeitsschwankungen bewerkstelligt wird. Dazu ist gemäss der Erfindung vorgesehen, dass die Ansteuerschaltung ausgebildet ist, die Leuchtdioden so anzusteuern, dass die Helligkeit des Lichtfelds in den verschiedenen Zwischenstufen gleichbleibt oder um maximal 20%, vorzugsweise maximal 10% schwankt. Gemäß einer anderen, alternativen oder zusätzlichen Ausführungsform kann die Einstellung der Leuchtdioden durch die Ansteuerschaltung, typischerweise über die Ströme auch so erfolgen, dass die Mittenhelligkeit oder Maximalhelligkeit in den Zwischenpositionen, beziehungsweise Zwischenstufen gleich bleibt oder um maximal 20%, vorzugsweise um maximal 10% schwankt. Unter Umständen kann eine Schwankung der Maximalhelligkeit, typischerweise in der Mitte des Lichtfelds oder in der Nähe des Schwerpunkts deutlicher sichtbar sein, als eine Schwankung der Gesamthelligkeit.

Gemäß einer Weiterbildung der Erfindung ist die Ansteuerschaltung außerdem so ausgebildet, unter Ansprechen auf die Änderung eines Stellwert des Stellelements eine Einstellung einer Zwischenstellung mit einer Zeitverzögerung vorzunehmen, dergestalt, dass die Helligkeiten der Leuchtdioden zeitlich gleitend oder in mehreren Zwischenstellungen eingestellt werden. Damit wird nicht nur eine angenehmere Bedienung erreicht, sondern die gleitende Einstellung erleichtert für eine Bedienperson auch das leichtere Auffinden einer optimalen Beleuchtung.

Die Erfindung wird nachfolgend genauer und anhand der Zeichnungen erläutert. In den Zeichnungen verweisen gleiche Bezugszeichen jeweils auf gleiche oder entsprechende Elemente.

### Kurzbeschreibung der Figuren

- Fig. 1: zeigt eine Beleuchtungsvorrichtung.
- Fig. 2: zeigt ein Diagramm der Intensitätsverteilungen der Lichtkegel der Leuchtdioden
- Fig. 3: zeigt als Diagramm die Überlagerung zweier Lichtkegel.
- Fig. 4: stellt eines Ausführungsform einer Beleuchtungseinrichtung mit einer Frontblende dar.
- Fig. 5: zeigt eine Variante der in Fig. 4 dargestellten Ausführungsform.
- Fig. 6: zeigt ein Ausführungsbeispiel einer Beleuchtungsvorrichtung 1 mit den von den Leuchtdioden abgestrahlten Lichtkegeln.
- Fig. 7: ist ein Diagramm des Helligkeitsverlaufs des von einer Leuchdiode erzeugten Lichtfelds.
- Fig. 8 bis Fig. 11: zeigen fotografische Aufnahmen des von einer Beleuchtungsvorrichtung ausgeleuchteten Bereichs auf einer Fläche.
- Fig. 12: zeigt verschiedene Konfigurationen des Aufbaus einer Beleuchtungsvorrichtung.
- Fig. 13: zeigt eine Schwenklinie eines beleuchteten Bereichs bei schräger Beleuchtung einer Fläche mit einer herkömmlichen Beleuchtungseinrichtung.
- Fig. 14 und 15: zeigen Schwenklinien, wie sie das Lichtfeld der Beleuchtungseinrichtung gemäß einer Ausführungsform der Erfindung bei einer Bewegung abfährt.
- Fig. 16: zeigt eine Ausführungsform mit einem zweidimensionalen Schwenkbereich.

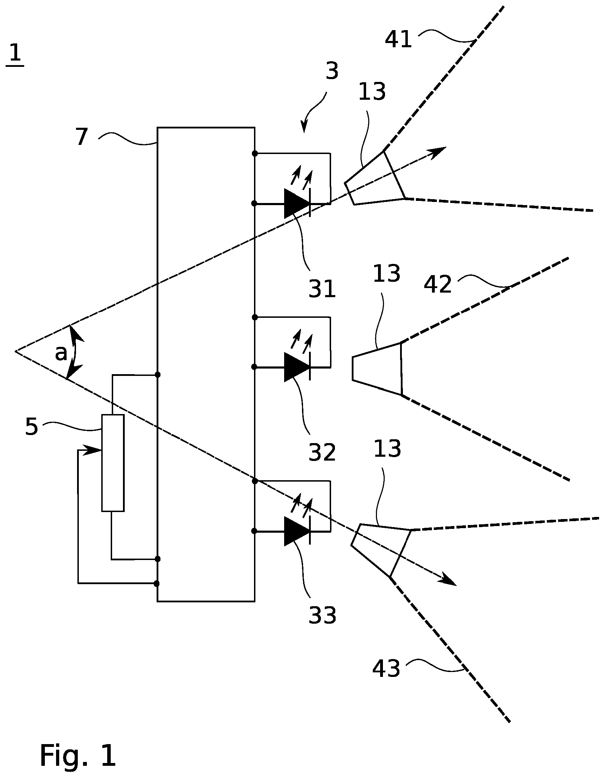

In Fig. 1 ist schematisch eine Beleuchtungsvorrichtung 1 gemäß der Erfindung mit einigen grundlegenden Komponenten dargestellt.

Die Beleuchtungsvorrichtung 1 umfasst Lichtquellenanordnung 3 mit mehreren halbleiterbasierten Lichtquellen in Form von Leuchtdioden 31, 32, 33. Es ist eine Ansteuerschaltung 7 vorgesehen, an welche die Leuchtdioden 31, 32, 33 angeschlossen sind, wobei die Leuchtdioden individuell zur Abgabe unterschiedlicher Lichtintensitäten ansteuerbar sind. Die Lichtquellen sind vorzugsweise starr, beziehungsweise unbeweglich angeordnet. Dies schließt aber nicht aus, dass die Lichtquellen doch eine Einstellmöglichkeit, beispielsweise zur Justage aufweisen. Durch die feststehende Anordnung sind die abgegebenen Lichtkegel unbeweglich in Bezug auf die Beleuchtungseinrichtung. Die Beleuchtungsvorrichtung 1 ermöglicht durch die unten genauer erläuterte Betriebsweise dennoch ein bewegliches Lichtfeld oder allgemeiner eine Einstellung der räumlichen Lage des Lichtfelds.

An die Ansteuerschaltung 7 ist eine Stelleinrichtung 5 angeschlossen. Eine einfache Möglichkeit einer solchen Stelleinrichtung 5 wäre beispielsweise wie dargestellt ein Potentiometer. Es ist aber eine Vielzahl von Stelleinrichtungen 5 möglich und die Ausführungsform der Fig. 1 ist nicht auf eine bestimmte Stelleinrichtung beschränkt. Mit der Stelleinrichtung 5 wird nun abhängig von dessen Stellung oder der Dauer oder Art der Betätigung ein Stellsignal erzeugt, anhand dessen die Ströme durch die Leuchtdioden 31, 32, 33 und damit deren Lichtintensitäten durch die Ansteuerschaltung individuell eingestellt werden.

Das Potentiometer ist ein Beispiel für eine Stelleinrichtung 5, die mit der Ansteuerschaltung 7 so zusammenwirkt, dass mit einer sukzessiven Betätigung des Stellmittels sich der Schwerpunkt des Lichtfelds, beziehungsweise dessen Mittenachse fortschreitend in eine Richtung bewegt. Wird der Drehknopf des Potentiometers sukzessive in eine Richtung gedreht, wandert durch Variation der Lichtintensitäten der Leuchtdioden 31, 32, 33 das Lichtfeld und damit der Schwerpunkt, beziehungsweise die Mittenachse des Lichtfelds in eine Richtung, bei Drehung in die entgegengesetzte Richtung wandert auch das Lichtfeld in entgegengesetzter Richtung zurück. Außerdem stellt ein Potentiometer ein Beispiel für eine Schiebe- oder Dreheinstelleinrichtung dar (je nachdem, ob es sich um ein Schiebe- oder Drehpotentiometer handelt), wobei die Stelleinrichtung und die Ansteuerschaltung so zusammenwirken, dass verschiedene Schiebe- oder Drehstellungen der Schiebe- oder Dreheinstelleinrichtung mit verschiedenen Beleuchtungsrichtungen korrespondieren.

Als Schwerpunkt wird im Sinne der Erfindung der Mittelpunkt der Lichtverteilung verstanden, der sich aus der mit der Lichtintensität gewichteten Mittel der Ortspositionen der Lichtverteilung. Der Schwerpunkt kann daher auch als räumlicher Intensitätsmittelpunkt bezeichnet werden. Die Mittenachse eines Lichtkegels, beziehungsweise des von einem oder mehreren Lichtkegeln erzeugte Lichtfeld läuft von der Lichtquelle ausgehend durch den Schwerpunkt, also den Intensitätsmittelpunkt.

Die Leuchtdioden 31, 32, 33 sind weiterhin mit Kollimierungseinrichtungen versehen, welche das Licht der Leuchtdioden 31, 32, 33 jeweils in Lichtkegel 41 , 42, 43 kollimieren, beziehungsweise bündeln. Die Kollimierungseinrichtungen werden nachfolgend auch als Lichtbündelungseinrichtungen bezeichnet. Wie schematisch dargestellt sind die Lichtkegel 41, 42, 43 allgemein mittels der Lichtbündelungseinrichtungen 13 unterschiedlich gerichtet, so dass die Leuchtdioden auf einem angeleuchteten Objekt unterschiedliche Bereiche ausleuchten. Die Lichtbündelungseinrichtungen 13 sind so ausgelegt, dass benachbarte Lichtkegel, also diejenigen Lichtkegel, die jeweils die ähnlichsten Richtungen aufweisen, überlappen. In der Darstellung der Fig. 1 sind die Lichtkegel 41 und 42 und die Lichtkegel 42 und 43 benachbart. Entsprechend überlappen auch die von den einzelnen Leuchtdioden ausgeleuchteten Bereiche eines angestrahlten Objekts.

Da sich mit der Position des Lichtkegels auch die Entfernung zur Beleuchtungseinrichtung ändert, können die Lichtbündelungseinrichtungen 13 für unterschiedliche Positionen so ausgeführt sein, dass sie das Licht unterschiedlich stark kollimieren, so dass an der jeweils gewünschten Position (Richtung und Entfernung) ein Leuchtfleck der gleichen Größe erzielt wird. Um den zusätzlichen Aufwand und / oder die Verwechslungsgefahr zwischen verschiedenen Elementen bei der Montage gering zu halten, kann dies beispielsweise bei der Verwendung von Kollimierungslinsen durch eine Anpassung des Abstands zur Leuchtdiode erreicht werden.

Mit der Stelleinrichtung 5 kann die Ansteuerschaltung 7 in einer oder mehreren Zwischenstufen nun so eingestellt werden, dass die Leuchtdioden benachbarter Lichtkegel gleichzeitig angesteuert und betrieben werden. Es ergibt sich bei der Einstellung einer Zwischenstufe ein Lichtfeld, dessen Schwerpunkt oder Mittenachse zwischen den Schwerpunkten oder Mittenachsen der Lichtfelder, beziehungsweise Lichtkegel der einzelnen Leuchtdioden 31, 32, 33 liegt. Je nach Verhältnis der Lichtintensitäten der Leuchtdioden kann in den Zwischenstufen der Schwerpunkt des ausgeleuchteten Bereiches mehr zu einem der Schwerpunkte der von den einzelnen Leuchtdioden beleuchteten Bereiche verschoben werden.

Allgemein bezeichnet der Begriff eines Lichtkegels im Sinne der Erfindung nicht zwangsläufig einen Kegel mit rundem Querschnitt. Unter einem Lichtkegel wird vielmehr allgemein ein sich mit wachsender Entfernung aufweitendes Lichtfeld mit beliebiger Form verstanden. Demgemäß muss der von einer Leuchtdiode ausgeleuchtete Bereich eines beleuchteten Objekts auch nicht rund sein.

Erfindungsgemäss beträgt der Winkel α zwischen den Richtungen der Schwerpunkte oder Mittenachsen der Lichtkegel der maximalen Auslenkung, also etwa zwischen der maximalen Auslenkung nach links zur maximalen Auslenkung nach rechts 30° bis 80°, vorzugsweise 35° bis 55°. Dieser Winkel entspräche bei einer mechanisch schwenkbaren Leuchte dem Schwenkwinkel. Der Winkel α kann gemäß einer Ausführungsform auch in Beziehung zur Anzahl der verschiedenen Richtungen der Lichtkegel gesetzt werden. Bei dem in Fig. 1 gezeigten Beispiel sind bei einem Winkel von 30° bis 60° drei Lichtkegel unterschiedlicher Richtungen vorhanden. Dies bedeutet, dass jeder Lichtkegel 10° bis 20° des gesamten Winkels α abdeckt. Gemäß einer Ausführungsform der Erfindung ist daher allgemein vorgesehen, dass die Beleuchtungseinrichtung 1 mehrere Leuchtdioden 31, 32, 33 mit einer oder mehreren Lichtbündelungseinrichtungen 13 umfasst, welche Licht in mehreren Lichtkegeln 41, 42, 43 unterschiedlicher Richtungen abgeben, wobei zwischen den Richtungen ein Winkel im Bereich von 10° bis 20° eingeschlossen wird. Diese Ausführungsform ist dabei insbesondere nicht auf die in Fig. 1 gezeigte Anzahl von drei Leuchtdioden oder drei Lichtkegel beschränkt.

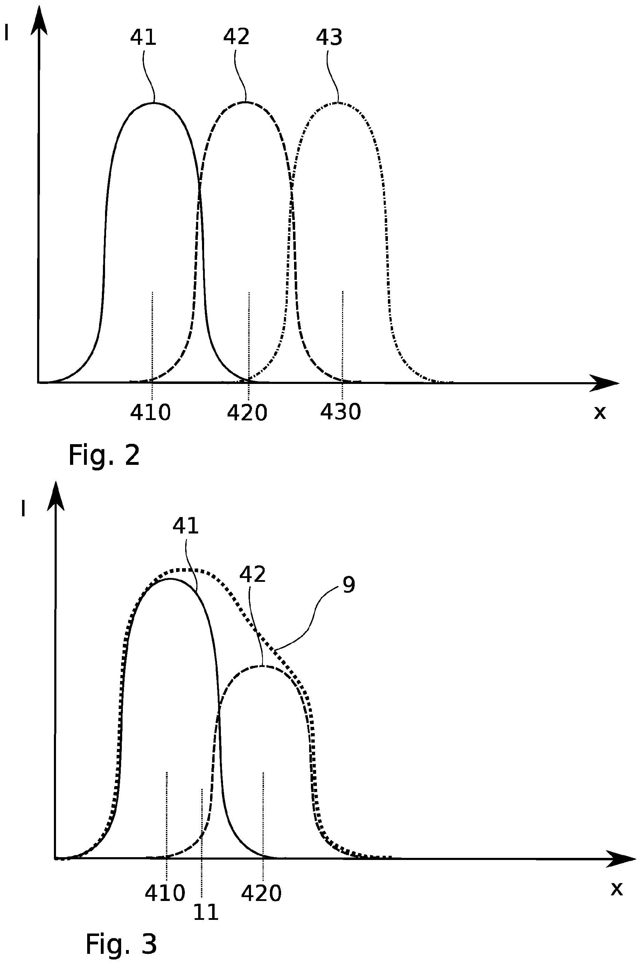

Fig. 2 zeigt schematisch ein Diagramm der Lichtintensitäten der Lichtkegel 41, 42, 43 entlang einer Ortskoordinate x, beispielsweise auf einem beleuchteten Objekt. Wie anhand von Fig. 2 ersichtlich sind die Schwerpunkte 410, 420, 430 der Lichtkegel 41, 42, 43 aufgrund deren unterschiedlichen Richtungen entlang der Ortskoordinate versetzt. Weiterhin ist auch zu erkennen, dass die benachbarten Lichtkegel 41, 42, sowie 42, 43 überlappen, so dass allgemein, ohne Beschränkung auf das spezielle Diagramm ein Bereich zwischen den jeweils benachbarten Schwerpunkten von beiden benachbarten Lichtkegeln beleuchtet wird. Das Beispiel ist schematisch auch in Bezug auf die Überlappung der einzelnen Lichtkegel. Die Überlappung ist vergleichsweise gering. In einer praktischen Anwendung bietet es sich meist an, eine größere Überlappung vorzusehen, obwohl gegebenenfalls auch eine geringere Überlappung, also etwa so wie dargestellt eine in ästhetischer Hinsicht akzeptable Form eines schwenkbaren Lichtfelds ergeben kann.

Fig. 3 zeigt nun in der gleichen Darstellung als Diagramm eine Zwischenstufe bei der Beleuchtung. Bei diesem Beispiel werden die beiden Leuchtdioden 31, 32 gemeinsam betrieben, so dass deren Licht in den sich überlappenden Lichtkegeln 41, 42 ausgestrahlt wird. Die Leuchtdioden sind nun mittels der Stelleinrichtung 5 so betreibbar, dass der Schwerpunkt des von den Leuchtdioden erzeugten Lichtfelds 11 bei Einstellung einer Zwischenstufe zwischen den Schwerpunkten 410, 420 der benachbarten Lichtkegel 41, 42 liegt. Im dargestellten Beispiel ist eine Zwischenstufe eingestellt, bei der der Lichtkegel 42 eine geringere Lichtintensität als der Lichtkegel 41 aufweist. Demgemäß ist der Schwerpunkt 11 des Lichtfelds 9 der Beleuchtungseinrichtung 1 bei dieser Einstellung zwischen den Schwerpunkten 410, 420 angeordnet und dabei zum Schwerpunkt des helleren Lichtkegels 410 hin verschoben. Die Ansteuerschaltung 7 ist dabei so eingerichtet, dass die jeweiligen Ströme durch die Leuchtdioden 31, 32, 33 so gewählt werden, dass die Helligkeit des Lichtfelds 9 in verschiedenen Zwischenpositionen gleich bleibt oder um maximal 20%, vorzugsweise maximal 10% schwankt. In diesem Fall sind also folglich die Ströme durch die Leuchtdioden und entsprechend die Lichtintensitäten der Lichtkegel 41, 42 gegenüber dem Fall, dass ein Lichtkegel nur mit einer der Leuchtdioden erzeugt wird, reduziert. Gemäß einer anderen, alternativen oder zusätzlichen Ausführungsform kann die Einstellung der Ströme auch so erfolgen, dass die Mittenhelligkeit oder Maximalhelligkeit in den Zwischenpositionen gleich bleibt oder um maximal 20%, vorzugsweise um maximal 10% schwankt.

Soll nun eine andere Zwischenstellung angefahren werden, um das Lichtfeld 9 auf einen bestimmten auszuleuchtenden Bereich auszurichten, werden die Intensitäten der Lichtkegel 41, 42, 43 entsprechend angepasst, beispielsweise, indem der Strom durch die Leuchtdiode 32 weiter abgesenkt und der Strom durch die Leuchtdiode 31 weiter angehoben wird, um den Schwerpunkt des Lichtfelds 9 weiter in Richtung auf den Schwerpunkt 410 des von der Leuchtdiode 31 erzeugten Lichtkegels 41 zu schieben. Diese Anpassung und Neueinstellung kann nach einer Ausführungsform anstelle einer sprunghaften Einstellung der neuen Parameter insbesondere auch allmählich erfolgen. Dazu kann die Ansteuerschaltung 7 eingerichtet sein, bei einer Betätigung des Stellelements 5 und damit einer die Änderung des Stellwerts eine Einstellung einer Zwischenstellung, beziehungsweise der neuen Parameter mit einer Zeitverzögerung vorzunehmen, indem die Helligkeiten der Leuchtdioden 31, 32, 33, sofern diese beteiligt sind, zeitlich gleitend oder in mehreren sukzessive Zwischenstellungen eingestellt werden. Gemäß einer Weiterbildung dieser Ausführungsform der Erfindung können die Zeitverzögerung und/oder die Parameter zur Ansteuerung der Leuchtdioden über die verschiedenen einstellbaren Positionen in einem Mikrocontroller berechnet und/oder als Werte in einem Speicher der Ansteuerschaltung hinterlegt sein.

Bei dem Beispiel der Fig. 1 sind drei Leuchtdioden 31, 32, 33 vorgesehen. Das Beispiel der Fig. 3 zeigt aber auch, dass eine erfindungsgemäße Verschiebung des Lichtfelds 9, beziehungsweise von dessen Schwerpunkt 11 ohne weiteres bereits mit zwei Leuchtdioden möglich ist.

Ein großer Vorteil der Erfindung ist, dass das Ausrichten des Lichtfelds ohne mechanische Teile erfolgen kann. Dies ermöglicht nicht nur einen kompakten Aufbau, sondern auch eine robuste und leicht reinigbare Konfiguration. Auf hervorstehende mechanische Bauteile, die schwieriger zu reinigen sind und letztendlich, besonders auch bei der Verwendung in Fahrzeug- oder Flugzeugkabinen das Verletzungsrisiko erhöhen, kann vollständig verzichtet werden. Diese Vorteile kommen besonders dann zum Tragen, wenn, wie in der Erfindung die Beleuchtungsvorrichtung eine Frontblende aufweist, hinter der die Leuchtdioden angeordnet sind. Insbesondere kann die Beleuchtungsvorrichtung dabei auch als Einbauleuchte mit einer Frontblende ausgebildet sein.

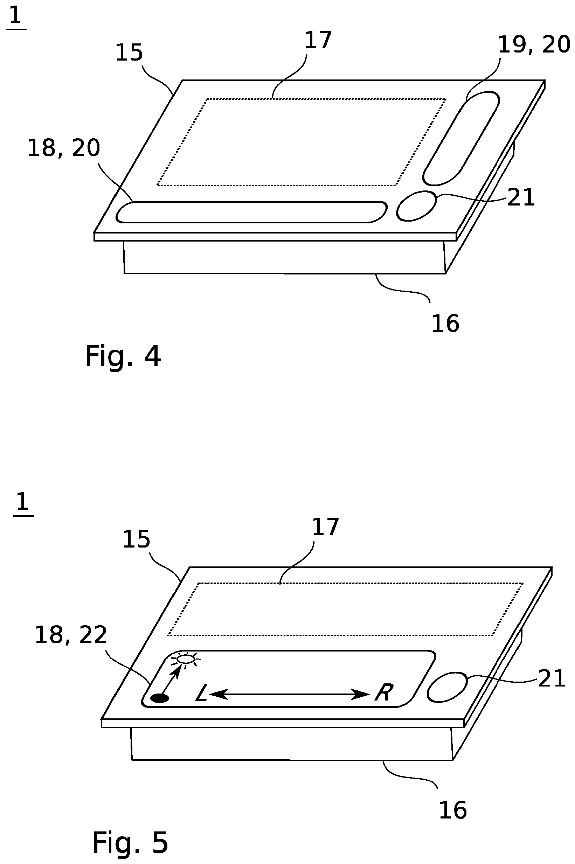

Fig. 4 zeigt eine solche Ausführungsform. Die Einbauleuchte umfasst ein Gehäuse 16 mit einer aufgesetzten Frontblende 15. Die Leuchtdioden sind im Gehäuse 16 angeordnet und strahlen im Betrieb durch die Frontblende 15 hindurch. Vorzugsweise ist auch die Ansteuerschaltung 7 im Gehäuse 16 untergebracht. Für eine kompakte Bauweise ist es allgemein, ohne Beschränkung auf das spezielle dargestellte Beispiel von Vorteil, wenn die Frontblende 15 ein Bedienelement aufweist, beziehungsweise, wenn in die Frontblende 15 ein Bedienelement integriert ist, mit welchem die Stelleeinrichtung betätigbar ist. Gemäß einer bevorzugten Weiterbildung der Erfindung umfasst das Bedienelement ein Touch-Element. Mit anderen Worten ist das Bedienelement als Berührungs-Bedienelement ausgeführt. Um die Richtung der Beleuchtung einzustellen, wie es mit der erfindungsgemäßen Anordnung und Ansteuerung der Leuchtdioden erreicht wird, ist besonders ein berührungsempfindlicher Schieberegler (ein sogenannter "Slider") für eine intuitive Bedienbarkeit vorteilhaft. In der in Fig. 4 gezeigten Ausführungsform ist ein Bedienelement 18 in Form eines berührungsempfindlichen Schiebereglers 20 vorgesehen, um die Stelleinrichtung 5 zu betätigen, beziehungsweise allgemeiner, um Stellwerte zur Einstellung der Abstrahlrichtung der Beleuchtungseinrichtung 1 zu erzeugen. Die Ausführungsform mit einer gemeinsamen Frontblende für mehrere Lichtquellen ermöglicht gerade durch die Betriebsweise mit feststehenden Lichtquellen und Bewegung des Lichtfelds durch Einstellung von Zwischenstufen einen sehr flache Aufbau. Gerade als Einbauleuchte in Fahrzeugen oder Passagierkabinen ergeben sich hier deutliche Vorteile. Übliche Lese- oder Sitzplatzleuchten, die eine Bewegung des Lichtfelds durch mechanische Schwenkung ermöglichen, haben dazu im Allgemeinen hervortretende Teile, um die Betätigung zum Schwenken der Leuchte zu ermöglichen. Gerade in der Enge beispielsweise einer Flugzeug-Passagierkabine können diese hervortretenden Teile aber etwa beim Aufstehen vom Sitz zu unangenehmen Stößen führen. Demgegenüber kann die Beleuchtungsvorrichtung in Form einer Einbauleuchte mit der gemeinsamen Frontblende in einer Ebene mit der Verkleidung eingebaut sein.

Demgemäß ist in einer Ausführungsform auch eine Beleuchtungseinrichtung 1 vorgesehen, welche mehrere Lichtquellen, insbesondere mehrere halbleiterbasierte Lichtquellen in Form von Leuchtdioden, sowie eine gemeinsame Frontblende für die mehreren Lichtquellen, wobei die Frontblende zumindest teilweise transparent ist, so dass das von den Lichtquellen abgestrahlte Licht durch die Frontblende nach außen gelangen kann, wobei zumindest die transparenten Bereiche der Frontblende aus Glas oder Kunststoff gefertigt sind. Diese Ausführungsform der Beleuchtungseinrichtung ist auch unabhängig von der Betriebsweise mit fest eingebauten Leuchtdioden und einer Bewegung des Lichtfelds durch Einstellung von Helligkeits-Zwischenstufen. Vorzugsweise sind die Leuchtdioden aber wiederum so eingebaut, dass sie Licht in Lichtkegeln unterschiedlicher Richtungen abstrahlen. Es können auch andere Mechanismen vorgesehen sein, um das Lichtfeld des abgestrahlten Lichts zu bewegen. Im einfachsten Falle können die Lichtquellen auch einfach Licht stationär in einem hinsichtlich seiner räumlichen Lage voreingestellten unbeweglichen Lichtfeld abgeben. Ein Bedienelement für den Nutzer zum Bewegen des Lichtfelds muss dann in einfachster Ausgestaltung nicht vorgesehen sein. Gegebenenfalls können opake Bereiche der Frontblende durch opake Abschnitte des Trägermaterials der Frontblende oder durch opake Beschichtungen vorhanden sein. Vorzugweise ist die Frontblende eben oder uniaxial gebogen, um eine gute Anpassung an die Form von größeren Verkleidungsteilen, in denen die Leuchte verbaut wird, zu haben. Optional können auch Bedienelemente, wie sie auch in den Beispielen der Fig. 4 und Fig. 5 vorgesehen sind, vorhanden sein. Besonders bieten sich dabei wie gesagt, Touch-Bedienelemente an, um die Oberfläche der Frontblende flach zu halten. Die vorstehend beschriebene Beleuchtungseinrichtung mit gemeinsamer Frontblende eignet sich besonders gut als Leseleuchte, um diese in eine Verkleidung einzubauen. Die Ausführungsform eines berührungsempfindlichen Schiebereglers 20 ist nicht auf eine Einbauleuchte mit Frontblende 15 als Beleuchtungseinrichtung 1 beschränkt. Vielmehr kann ein solches Bedienelement auch in anderen Konfigurationen eingesetzt werden. Demgemäß ist in einer Ausführungsform allgemein ein berührungsempfindliches Bedienelement 18, vorzugsweise ein berührungsempfindlicher Schieberegler zur Betätigung der Stelleinrichtung 5 vorgesehen. Dieser kann von der Einbauleuchte getrennt sein, beispielsweise in Form eines Bedienelements in einer Armlehne und/oder in Form einer Fernbedienung und/oder als Bedienungselement in einem Entertainment-System, beispielsweise mit einem berührungsempfindlichen Bildschirm.

Allgemein ist es sinnvoll, wenn die Beleuchtungseinrichtung weitere Bedienmöglichkeiten aufweist. Vorzugsweise ist auch ein Ein-Aus-Schaltelement 21 vorgesehen. Auch dieses kann im Falle einer Integration in die Frontblende 15 als berührungsempfindliches Bedienelement ausgeführt sein.

Vorteilhaft ist allgemein auch eine weitere an die Ansteuerschaltung 7 angeschlossenes Stelleinrichtung, um die Helligkeit der Leuchtdioden 31, 32, 33, beziehungsweise die insgesamt abgegebene Lichtintensität einzustellen. Bei dem in Fig. 4 gezeigten Beispiel ist ein weiteres Bedienelement 19 in Form eines berührungsempfindlichen Schiebereglers 20 vorgesehen, um die Helligkeit der Beleuchtungsvorrichtung 1 einstellen zu können.

Fig. 5 zeigt eine Variante der Ausführungsform nach Fig. 4. Auch diese Variante ist als Einbauleuchte mit einer Frontblende 15 ausgeführt. Bei dieser Variante sind keine separaten Bedienelemente 18, 19 für Helligkeit und Richtung vorgesehen. Vielmehr ist ein einzelnes Bedienelement 18 als zweidimensionales Bedienfeld in Form eines berührungsempfindlichen Matrix-Reglers 22 vorhanden. Hier kann wie durch die Symbolbezeichnung auf dem Bedienfeld verdeutlicht, durch die Position der Berührung in der einen Richtung die Beleuchtungsrichtung und in der dazu senkrechten Richtung die Helligkeit eingestellt werden.

In bestimmten Anwendungsfällen ist es vorteilhaft, wenn das Bedienelement nicht im Gehäuse integriert ist, oder ein zusätzliches, von der Einbauleuchte getrenntes Bedienelement vorgesehen wird. Dies gilt in Fällen, in denen die Leuchte aus der Sitz- oder Liegeposition schlecht erreichbar ist, beispielsweise, weil in einer günstigen Position kein Bauraum zur Verfügung steht, weil eine günstige Position aus Gründen der Designästhetik nicht wünschenswert ist oder weil eine leicht erreichbare Position optisch ungünstig ist. Dies kann auch der Fall sein, wenn die Person nur eingeschränkt bewegungsfähig ist, z.B. in einem Krankenhausbett, sich ihre Position durch die elektrischen Verstellmöglichkeiten des Bettes aber ändern kann, um damit für die Nutzung der Leuchte auch eine Anpassung der Beleuchtungsrichtung an die jeweilige Situation notwendig ist. In diesen Fällen wäre bei einer mechanisch einstellbaren Leuchte ein Motor notwendig, um die Einstellung des Lichtkegels auf Signal der Bedienvorrichtung (18,19) hin zu ändern. Beispielsweise kann ein solches Bedienelement in einer Armlehne eines mit der Beleuchtungseinrichtung zu beleuchtenden Sitzplatzes integriert sein. Gemäß noch einer Ausführungsform kann das Bedienelement eine Fernbedienung umfassen.

Die Frontblende 15 kann aus ästhetischen Gründen undurchsichtig sein. Dann kann ein Fenster 17 vorgesehen werden, hinter dem die Leuchtdioden 31, 32, 33 angeordnet sind und welches das Licht der Leuchtdioden hindurchlässt. Aus ästhetischen Gründen kann das Fenster 17 seinerseits mit einer Beschichtung oder Maskierung versehen sein, um einen sogenannten Dead-Front-Effekt zu erzielen. Hierbei wird das Innere der Beleuchtungseinrichtung durch die Beschichtung oder Maskierung für den Betrachter verdeckt, wobei die Leuchtdioden aber durch die Beschichtung oder Maskierung hindurch leuchten können. Ein Beispiel ist eine halbdurchlässige Beschichtung, welche das Innere des Gehäuses hinreichend abdunkelt. Ein anderes Beispiel ist eine Maskierung in Form einer strukturierten Beschichtung, die beispielsweise in einem Gittermuster kleine Bereiche der Blende frei lässt, durch die das Licht der Leuchtdioden hinausgelangt.

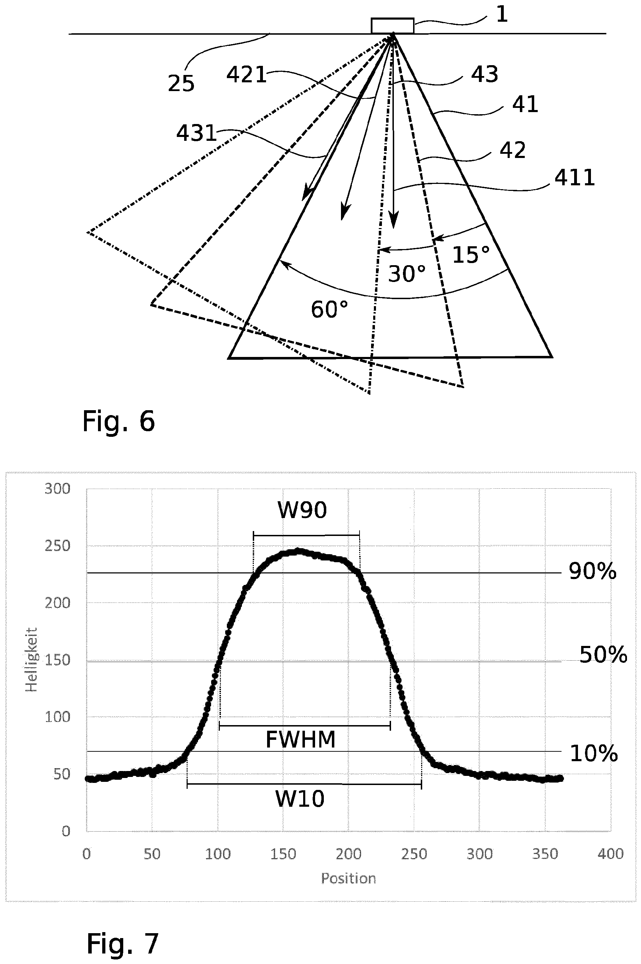

Fig. 6 zeigt ein Ausführungsbeispiel für die Konfiguration der Beleuchtungsparameter einer erfindungsgemäßen Beleuchtungsvorrichtung 1. Lediglich beispielhaft ist die Beleuchtungsvorrichtung 1 als Deckenleuchte ausgebildet, die in einer Decke 25 des Innenraumes eines Fahrzeugs oder Flugzeugs verbaut sein kann. Die Leuchtdioden der Beleuchtungsvorrichtung strahlen Lichtkegel 41, 42, 43 ab, die jeweils einen Öffnungswinkel von 60° aufweisen. Die Richtungen benachbarter, einander überlappender Lichtkegel weisen in diesem Beispiel einen Winkel von jeweils 15° auf. Demgemäß hat die Richtung des Lichtkegels 43 zum Lichtkegel 41 einen Winkel von 30°. Wie ersichtlich überlappen bei diesem Ausführungsbeispiel nicht nur die benachbarten Lichtkegel, sondern auch die übernächsten Lichtkegel, also im dargestellten Beispiel die Lichtkegel 41 und 43. Allgemein, ohne Beschränkung auf das dargestellte Beispiel ist dazu in einer Ausführungsform der Erfindung vorgesehen, dass zumindest ein Teil der Leuchtdioden 31, 32, 33 so kollimiert ist, dass der Öffnungswinkel der Lichtkegel 41, 42, 43 größer ist, als der Winkel zwischen den Lichtkegeln, beziehungsweise zwischen den Mittenachsen 411, 421, 431 der Lichtkegel.

Gemäß einer anderen, auch im Ausführungsbeispiel der Fig. 6 realisierten Ausführungsform sind die Leuchtdioden 31, 32, 33 so kollimiert, dass der Winkel zwischen benachbarten Lichtkegeln höchstens gleich dem halben Öffnungswinkel der Lichtkegel 41, 42, 43 ist.

Die Überlappung wird gemäß der Erfindung so ausgedrückt werden, dass zumindest ein Teil der Leuchtdioden 31, 32, 33 so kollimiert ist, so dass zumindest einer der Lichtkegel sowohl mit einem zweiten, benachbarten Lichtkegel überlappt, als auch mit einem dritten Lichtkegel, welcher zum zweiten Lichtkegel benachbart ist. Als benachbarter Lichtkegel wird ein Lichtkegel erachtet, der für einen bestimmten Richtungssinn der Winkelmessung zum betrachteten Lichtkegel den geringsten Winkel seiner Strahlrichtung, beziehungsweise dessen Mittenachse den geringsten Winkel zur Mittenachse des betrachteten Lichtkegels einnimmt.

Die vorstehend beschriebenen Merkmale dienen dazu, einen fließenden Übergang der Form der Lichtfelder beim Bewegen des Lichtfelds, beziehungsweise beim Schwenken des resultierenden Lichtkegels in den Zwischenpositionen zu erreichen. Dazu ist es allgemein auch von Vorteil, wenn der von den einzelnen Leuchtdioden erzeugte Lichtkegel, beziehungsweise der Leuchtfleck auf dem beleuchteten Objekt nicht zu scharf abgegrenzt ist. Ein sogenanntes Top-Hat-Profil mit scharfer Umrandung ist demzufolge eher nachteilig.

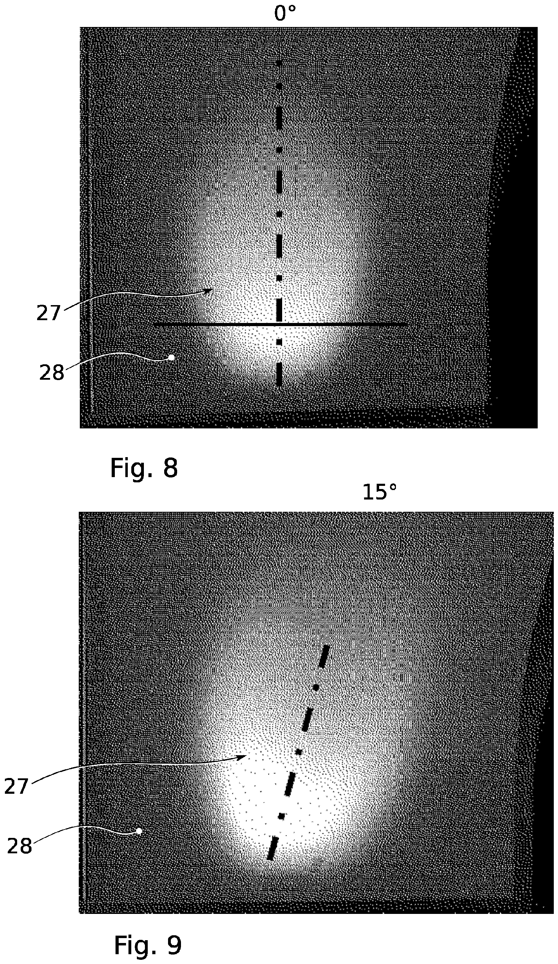

Fig. 7 zeigt dazu einen Helligkeitsverlauf auf einer beleuchteten Fläche entlang einer Linie, wie er von einer der kollimierten Leuchtdioden erzeugt wird. Eine fotografische Aufnahme des zugehörigen Lichtflecks 27 auf einer von der Beleuchtungsvorrichtung 1 beleuchteten Fläche 28 zeigt Fig. 8. Die Linie, entlang derer der Helligkeitsverlauf aus den Grauwerten der Aufnahme extrahiert wurde, ist in Fig. 8 als waagerechter Balken, welcher durch das Helligkeitsmaximum des Lichtflecks 27 läuft, eingezeichnet. In Fig. 7 sind drei Linien eingezeichnet, welche die Niveaus von 10%, 50% und 90% der Maximalhelligkeit kennzeichnen. Die Breite der Helligkeitsverteilung bei der 50%-Linie ergibt demgemäß die Halbwertsbreite der Verteilung. Eine Verteilung, die günstig ist, um einen optischen Eindruck eines durchgehend in seiner Position verstellbaren Lichtflecks zu unterstützen, kann erreicht werden, wenn die Flanken wie oben bereits erläutert, nicht zu abrupt ansteigen. Ein Maß hierfür ist die Differenz der Breiten der Verteilung bei 10% und 90% der Maximalhelligkeit im Verhältnis zur Halbwertsbreite. Im Beispiel der Fig. 7 beträgt dieser Wert (W10-W90) / FWHM= 0,744, wobei W10 die Breite der Helligkeitsverteilung bei 10% der Maximalhelligkeit, W90 die Breite der Helligkeitsverteilung bei 90% der Maximalhelligkeit und FWHM die Halbwertsbreite bezeichnen. Die Werte W90, W10 und FWHM sind in Fig. 7 gekennzeichnet. Ohne Beschränkung auf die dargestellten Beispiele wird bevorzugt, wenn der vorstehend genannte Parameter einen Wert von mindestens 0,5 aufweist. Andererseits ist es auch günstig, die Verteilung nicht zu flach werden zu lassen. In diesem Fall würde das Lichtfeld zu breit werden, was beispielsweise bei einer Leseleuchte unerwünscht ist, da ja die Helligkeit auf den zu beleuchtenden Gegenstand konzentriert werden soll. Auch ist dann das Schwenken des Lichtfelds weniger deutlich wahrnehmbar. Gemäß noch einer Ausführungsform ist daher vorgesehen, dass der oben genannte Parameter (W10-W90) / FWHM einen Wert von kleiner als 1,6 aufweist.

Demgemäß ist in einer Weiterbildung der Erfindung vorgesehen, dass für die Helligkeitsverteilung des Lichts einer der Leuchtdioden, vorzugsweise aller Leuchtdioden 31, 32, 33 auf einer von der Beleuchtungsvorrichtung 1 beleuchteten Fläche 28 entlang einer Linie durch das Helligkeitsmaximum der Lichtverteilung der Parameter (W10-W90) / FWHM einen Wert im Bereich von 0,5 bis 1,6 aufweist.

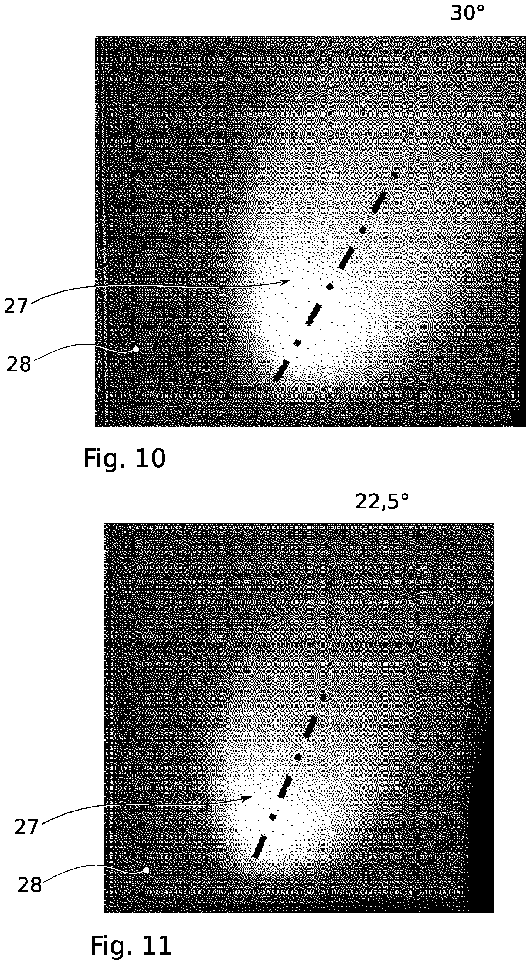

Die Fig. 9 bis 11 zeigen weitere fotografische Aufnahmen des von einer Beleuchtungsvorrichtung ausgeleuchteten Bereichs, beziehungsweise Lichtflecks 27 auf einer Fläche 28. Die Fig. 8 bis 10 zeigen dabei Lichtflecken 27, die von Lichtkegeln einzelner Leuchtdioden 31, 32, 33, allerdings entsprechend der in Fig. 6 gezeigten Konfiguration unter unterschiedlichen Winkeln erzeugt wurden. Im Beispiel der Fig. 8 ist der Winkel 0°, bei Fig. 9 hat der Lichtkegel zu dem Lichtkegel zu Fig. 8 einen Winkel von 15° und bei dem Beispiel der Fig. 10 einen Winkel von 30°. Bei dem Beispiel der Fig. 11 wird der Lichtfleck erfindungsgemäß durch Überlagerung benachbarter Lichtkegel zweier Leuchtdioden, beziehungsweise durch Überlagerung der Lichtflecke aus Fig. 9 und Fig. 10 erzeugt. Die Lichtintensität beider Leuchtdioden ist halbiert, so dass die Gesamthelligkeit des Lichtfelds derjenigen der Lichtkegel der einzelnen Leuchtdioden entspricht. Aus dieser Überlagerung ergibt sich ein effektiver Winkel der Mittenachse, beziehungsweise der Richtung des Schwerpunkts zur Richtung des Schwerpunkts des Lichtflecks aus Fig. 8 von 22,5°. Wie weiterhin ersichtlich ist, wird die Ausdehnung des Lichtflecks bei der Zwischenposition gemäß Fig. 11 nicht merklich vergrößert.

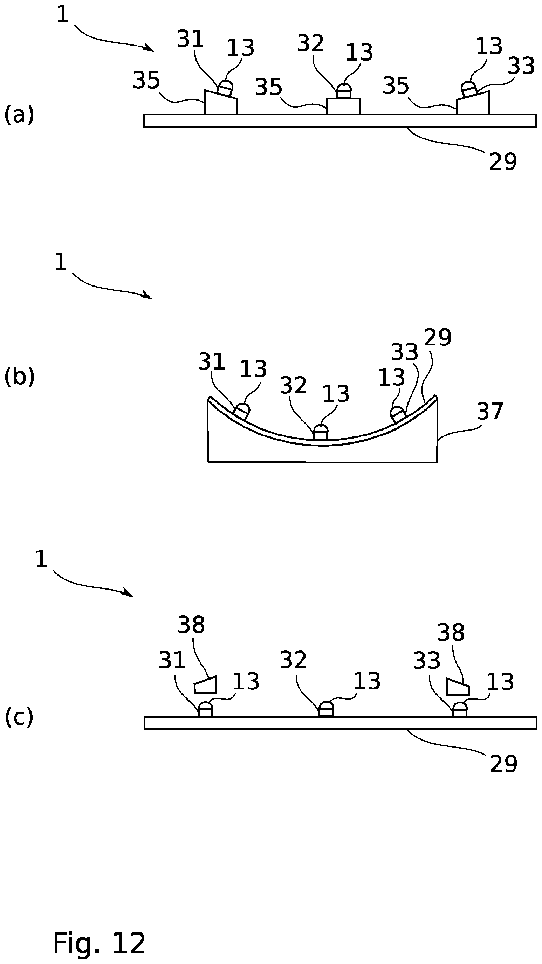

Fig. 12 zeigt verschiedene Möglichkeiten des Aufbaus einer Beleuchtungsvorrichtung 1, mit welchem eine Kollimation des Lichts der Leuchtdioden in Lichtkegel unterschiedlicher Richtungen möglich ist. Gemäß einer Ausführungsform sind die Leuchtdioden 31, 32, 33 wie im Beispiel (a) gezeigt, auf Podesten 35 montiert, die teilweise geneigte Halteflächen aufweisen, so dass die Leuchtdioden 31, 32, 33 mitsamt der Lichtbündelungseinrichtungen 13 gegenüber der Fläche der Leiterplatte im vorgesehenen Winkel gekippt sind. Allgemein, ohne Beschränkung auf die dargestellten Ausführungsform können also die Leuchtdioden auf geneigten Montageelementen auf einer Unterlage, insbesondere einer Leiterplatte befestigt sein. Als Kollimierungselemente 13 sind hier beispielhaft Linsen vorgesehen. Alternativ oder zusätzlich können auch geeignete Kollimierungselemente, beziehungsweise Lichtbündelungseinrichtungen 13 vorgesehen sein, die unerwünschtes seitlich abgestrahltes Licht auffangen. Beispielsweise können dazu offene Röhren die Leuchtdioden seitlich abdecken.

Bei dem Beispiel (b) ist eine Unterlage 37 mit gewölbter Oberfläche vorgesehen. Werden die Leuchtdioden 31, 32, 33 mit den Lichtbündelungseinrichtungen 13 mit dieser Unterlage verbunden, nehmen diese entsprechend der lokalen Neigung der Oberfläche eine bestimmte Neigung ein. Beispielsweise kann dazu auch eine flexible Leiterplatte 29 vorgesehen sein, auf welcher die Leuchtdioden aufgebracht sind.

Weiterhin können, wie in Beispiel (c) gezeigt, allgemein optische Ablenkelemente 38 vorgesehen sein, um Lichtkegel unterschiedlicher Richtungen zu erzeugen. Diese Ausführungsform bietet den Vorteil, dass die Leuchtdioden direkt auf einer ebenen Leiterplatte 29 montiert werden können. In diesem Fall können die Funktion der Lichtbündelungseinrichtungen 13 und der Ablenkelemente 38 auch in einem optischen Element (nicht dargestellt) zusammengefasst werden. Dieses ist dann beispielsweise als optisches Freiformelement ausgeführt. Die optischen Elemente können besonders vorteilhaft auch in die Gehäuseabdeckung, beziehungsweise die Frontblende integriert sein. Beispielsweise kann die Frontblende als Linsen geformte Abschnitte aufweisen.

Zudem können die optischen Elemente sich auch als Elemente eines Bauteils auf einer gemeinsamen Grundplatte befinden. Insbesondere in den Beispielen 12 (a) wäre dies ein Linsenarray und in Beispiel 12 (c) ein Array von Freiformelementen. Dadurch kann die Herstellung der optischen Elemente und auch die Montage in der Leuchte vereinfacht werden.

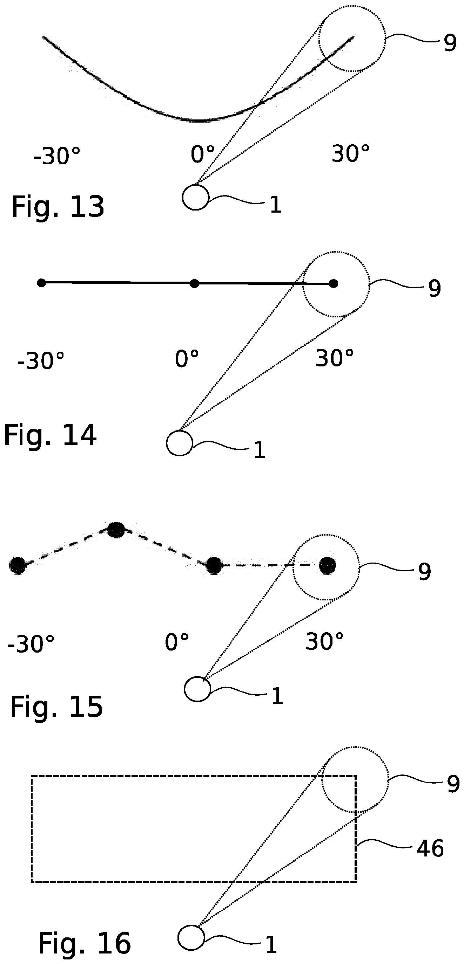

Fig. 13 zeigt eine Schwenklinie 45 eines von einer herkömmlichen Beleuchtungsvorrichtung beleuchteten Bereichs bei schräger Beleuchtung einer Fläche. Entlang dieser Schwenklinie 45 bewegt sich das Lichtfeld 9, wenn die Lichtquelle mechanisch zwischen einem Winkel von -30° bis zu einem Winkel von +30° geschwenkt wird und die zu beleuchtende Fläche schräg beleuchtet. Da die Schwenkachse schräg zur Fläche steht, ergibt sich die nicht geradlinige Form der Linie. Im Speziellen repräsentiert die Schwenklinie den Rand eines Kegelschnitts und ist typischerweise eine Hyperbel.

Mit der Erfindung kann nun durch geeignete Ausrichtung der einzelnen Lichtquellen und Lichtbündelungseinrichtungen 13 eine prinzipiell beliebig geformte Schwenklinie 45 auch bei schräger Beleuchtung einer auszuleuchtenden Fläche eingestellt werden.

Ein solches Beispiel zeigt Fig. 14. Auch hier wird eine zu beleuchtende Fläche schräg von der Beleuchtungsvorrichtung 1 angestrahlt. Die einzelnen Lichtkegel der Leuchtdioden sind aber so ausgerichtet, dass diese Stützpunkte einer geraden Linie liegen. Entsprechend liegen auch die durch Überlagerung der Lichtkegel erzeugten Zwischenpositionen auf der geradlinigen Schwenklinie 45. Auch anders geformte Wege, beziehungsweise Schwenklinien 45 können durch entsprechende Ausrichtung der Lichtkegel der Leuchtdioden erzeugt werden. Fig. 15 zeigt hierzu ein weiteres Beispiel, bei welchem ein Teil der Schwenklinie 45 von einem geraden Pfad abweicht. Ein solcher Pfad könnte beispielsweise wünschenswert sein, wenn ein Teil der zu beleuchtenden Fläche gewölbt ist, so dass der nicht lineare Pfad der Schwenklinie die Wölbung wieder kompensiert und der Eindruck einer geradlinigen Schwenkung entsteht. Den Ausführungsbeispielen der Fig. 14 und Fig. 15 ist ohne Beschränkung auf die speziellen dargestellten Ausgestaltungen gemeinsam, dass die Strahlrichtungen der Lichtkegel der mindestens drei Leuchtdioden nicht alle in einer Ebene liegen.

Die durch die Beleuchtungsvorrichtung erzeugten Leuchtfleckpositionen, ohne Überblendung mehrerer Lichtkegel, können also entlang einer - nicht zwangsläufig geraden - eindimensionalen Linie angeordnet sein. Sie können aber gemäß einer weiteren Ausführungsform der Erfindung auch ein zweidimensionales Feld abdecken, so dass die Positionen nicht nur in einer sondern in zwei Dimensionen einstellbar ist. In diesem Fall kann eine beliebige Leuchtfleckposition nicht durch die Überblendung von nur zwei Lichtkegeln, sondern durch mehrere Lichtkegel, insbesondere drei Lichtkegeln bei einer Dreiecksanordnung oder vier Lichtkegeln bei einer quadratischen bzw. rechteckigen Anordnung erzielt.

Fig. 16 zeigt hierzu ein Ausführungsbeispiel. Die Richtungen der Lichtkegel der Leuchtdioden, beziehungsweise entsprechend der von den Lichtkegeln erzeugten Leuchtflecken sind in zwei Raumrichtungen verteilt, so dass durch Überlagerung der Lichtkegel und Einstellung von Zwischenpositionen das Lichtfeld innerhalb eines zweidimensionalen Schwenkbereichs 46 geschwenkt werden kann. Der Schwenkbereich 46 ist bei dem dargestellten Beispiel ein rechteckiger Bereich, kann aber auch beliebige andere Formen haben.

Demgemäß sieht die Erfindung in einer Weiterbildung vor, dass die Lichtkegel der Leuchtdioden 31, 32, 33 so ausgerichtet sind, dass die von den Lichtkegeln ausgeleuchteten Bereiche in zwei Raumrichtungen verteilt sind, so dass durch Überlagerung der Lichtkegel und somit durch Einstellung von Zwischenpositionen das Lichtfeld 9, beziehungsweise der von der Beleuchtungseinrichtung 1 ausgeleuchtete Bereich innerhalb eines zweidimensionalen Schwenkbereichs 46 bewegt, vorzugsweise geschwenkt werden kann.

Die erfindungsgemäße Beleuchtungseinrichtung 1 kann insbesondere als Leseleuchte für verstellbare Sitz- oder Liegemöbel eingesetzt werden, bei welchen also sich die Position des auszuleuchtenden Bereichs sich mit der Sitz- oder Liegeposition ändert. Typische Anwendungen hierzu sind Leseleuchten in Flugzeugen, Schiffen, Zügen, Automobilen oder anderen Fahrzeugen. Zudem ist diese Leuchte auch insbesondere für verstellbare Betten, insbesondere für Krankenbetten in Krankenhäusern oder ähnlichen Einrichtungen geeignet.

### Bezugszeichenliste

| | |
|---|---|
| 1 | Beleuchtungsvorrichtung |
| 3 | Lichtquellenanordnung |
| 5 | Stelleinrichtung |
| 7 | Ansteuerschaltung |
| 9 | Lichtfeld |
| 11 | Schwerpunkt von 9 |
| 13 | Lichtbündelungseinrichtung |
| 15 | Frontblende |
| 16 | Gehäuse |
| 17 | Fenster |
| 18, 19 | Bedienelement |
| 20 | berührungsempfindlicher Schieberegler |
| 21 | Ein-Aus-Schaltelement |
| 22 | berührungsempfindlicher Matrix-Regler |
| 25 | Decke |
| 27 | Lichtfleck |
| 28 | beleuchtete Fläche |
| 29 | Leiterplatte |
| 31, 32, 33 | Leuchtdiode |
| 35 | Podest |
| 37 | Unterlage mit gewölbter Oberfläche |
| 38 | optisches Ablenkelement |
| 41, 42, 43 | Lichtkegel |
| 45 | Schwenklinie |
| 46 | zweidimensionaler Schwenkbereich |
| 50 | Schiebeeinstelleinrichtung |
| 51 | Dreheinstelleinrichtung |
| 410, 420, 430 | Schwerpunkte der Lichtkegel |
| 411, 421, 431 | Mittenachsen der Lichtkegel |

## Patentansprüche

1. Beleuchtungsvorrichtung (1) mit einer Lichtquellenanordnung (3) mit mehreren halbleiterbasierten Lichtquellen in Form von Leuchtdioden (31, 32, 33), deren emittiertes Licht so gebündelt wird, dass es unterschiedlich gerichtete Lichtkegel (41, 42, 43) bildet, die sich in einem Lichtfeld überlappen, wobei die Beleuchtungsvorrichtung (1) eine Stelleinrichtung (5) zur Abgabe eines Stellsignals für die Einstellung der Beleuchtungsrichtung und eine Ansteuerschaltung (7) aufweist, welche mit der Stelleinrichtung (5) verbunden ist, wobei mit der Stelleinrichtung (5) Zwischenstufen einstellbar sind, bei welchen Leuchtdioden (31, 32, 33) benachbarter und überlappender Lichtkegel (41, 42, 43) von der Ansteuerschaltung (7) gemeinsam und in variierbarer Lichtintensität so betreibbar sind, dass der Schwerpunkt des von den Leuchtdioden erzeugten Lichtfelds (9) bei den Zwischenstufen zwischen den Schwerpunkten (410, 420, 430) benachbarter Lichtkegel (41, 42, 43) liegt,
wobei die Leuchtdioden (31, 32, 33) individuell zur Abgabe unterschiedlicher Lichtintensitäten ansteuerbar sind und wobei zumindest ein Teil der Leuchtdioden (31, 32, 33) so kollimiert ist, dass zumindest einer der Lichtkegel sowohl mit einem zweiten, benachbarten Lichtkegel überlappt, als auch mit einem dritten Lichtkegel, welcher zum zweiten Lichtkegel benachbart ist, wobei die Helligkeit des Lichtfelds in den verschiedenen Zwischenstufen gleich bleibt oder um maximal 20% schwankt, wobei dadurch die Lichtquellen jeweils in einen unbeweglichen Lichtkegel Licht abstrahlen, wobei der Winkel α zwischen den Richtungen der Schwerpunkte der Lichtkegel der maximalen Auslenkung 30° bis 80°, vorzugsweise 35° bis 55° beträgt, die Beleuchtungsvorrichtung (1) als Einbauleuchte mit einer Frontblende (15) ausgebildet ist, wobei die Leuchtdioden (31, 32, 33) hinter der Frontblende (15) angeordnet sind und wobei die Frontblende zumindest teilweise transparent ist.

2. Beleuchtungseinrichtung (1) gemäß dem vorstehenden Anspruch, **dadurch gekennzeichnet, dass** die Lichtquellen ortsfest angeordnet sind.

3. Beleuchtungsvorrichtung (1) gemäß einem der vorstehenden Ansprüche, **gekennzeichnet durch** zumindest eines der Merkmale:
- die Ansteuerschaltung (7) ist ausgebildet, die Leuchtdioden (31, 32, 33) so anzusteuern, dass die Helligkeit des Lichtfelds (9) in den Zwischenstufen gleich bleibt oder maximal 10% schwankt,
- die Einstellung der Leuchtdioden (31, 32, 33) erfolgt so, dass die Mittenhelligkeit oder Maximalhelligkeit in den Zwischenstufen gleich bleibt oder um maximal 20%, vorzugsweise um maximal 10% schwankt.

4. Beleuchtungsvorrichtung gemäß dem vorstehenden Anspruch, **dadurch gekennzeichnet, dass** die Stelleinrichtung (5) und die Ansteuerschaltung (7) so zusammenwirken, dass mit einer sukzessiven Betätigung des Stellmittels sich der Schwerpunkt (11) des Lichtfelds (10) bewegt.

5. Beleuchtungsvorrichtung gemäß einem der vorstehenden Ansprüche, **dadurch gekennzeichnet, dass** die Stelleinrichtung (5) eine Schiebe- oder Dreheinstelleinrichtung (50, 51) umfasst, wobei die Stelleinrichtung (5) und die Ansteuerschaltung (7) so zusammenwirken, dass verschiedene Schiebe- oder Drehstellungen der Schiebe- oder Dreheinstelleinrichtung (50, 51) mit verschiedenen Beleuchtungsrichtungen korrespondieren.

6. Beleuchtungsvorrichtung (1) gemäß einem der vorstehenden Ansprüche, **dadurch gekennzeichnet, dass** in die Frontblende (15) ein Bedienelement (18) integriert ist, mit welchem das Stellelement (5) betätigbar ist.

7. Beleuchtungsvorrichtung gemäß einem der vorstehenden Ansprüche, **gekennzeichnet durch** ein berührungsempfindliches Bedienelement (18), vorzugsweise einen berührungsempfindlichen Schieberegler zur Betätigung des Stellelements (5).

8. Beleuchtungsvorrichtung gemäß einem der vorstehenden Ansprüche, **gekennzeichnet durch** eine weitere an die Ansteuerschaltung (7) angeschlossene Stelleinrichtung, um die insgesamt von der Beleuchtungsvorrichtung (1) abgegebene Lichtintensität einzustellen.

9. Beleuchtungsvorrichtung gemäß einem der vorstehenden Ansprüche, **dadurch gekennzeichnet, dass** die Ansteuerschaltung (7) ausgebildet ist, unter Ansprechen auf die Änderung eines Stellwert des Stellelements (5) eine Einstellung einer Zwischenstellung mit einer Zeitverzögerung vorzunehmen, dergestalt, dass die Helligkeiten der Leuchtdioden (31, 32, 33) zeitlich gleitend oder in mehreren sukzessive Zwischenstellungen eingestellt werden.

10. Beleuchtungsvorrichtung gemäß einem der vorstehenden Ansprüche, **dadurch gekennzeichnet, dass** die mehreren Leuchtdioden (31, 32, 33) Licht in mehreren Lichtkegeln (41, 42, 43) unterschiedlicher Richtungen abgeben, wobei zwischen den Richtungen ein Winkel im Bereich von 10° bis 20° eingeschlossen wird.

11. Beleuchtungsvorrichtung gemäß einem der vorstehenden Ansprüche, **gekennzeichnet durch** zumindest eines der Merkmale:
- zumindest ein Teil der Leuchtdioden (31, 32, 33) ist so kollimiert, dass der Öffnungswinkel der Lichtkegel (41, 42, 43) größer ist, als der Winkel zwischen den Lichtkegeln (41, 42, 43),
- zumindest ein Teil der Leuchtdioden (31, 32, 33) ist so kollimiert, dass der Winkel zwischen benachbarten Lichtkegeln (41, 42, 43) höchstens gleich dem halben Öffnungswinkel der Lichtkegel (41, 42, 43) ist..

12. Beleuchtungsvorrichtung gemäß einem der vorstehenden Ansprüche, **dadurch gekennzeichnet, dass** für die Helligkeitsverteilung des Lichts einer der Leuchtdioden, vorzugsweise aller Leuchtdioden (31, 32, 33) auf einer von der Beleuchtungsvorrichtung (1) beleuchteten Fläche (28) entlang einer Linie durch das Helligkeitsmaximum der Lichtverteilung der Parameter (W10-W90) / FWHM einen Wert im Bereich von 0,5 bis 1,6 aufweist, wobei W10 die Breite der Helligkeitsverteilung bei 10% der Maximalhelligkeit, W90 die Breite der Helligkeitsverteilung bei 90% der Maximalhelligkeit und FWHM die Halbwertsbreite der Helligkeitsverteilung bezeichnen.

13. Beleuchtungsvorrichtung gemäß einem der vorstehenden Ansprüche, **gekennzeichnet durch** zumindest eines der Merkmale
- die Leuchtdioden (31, 32, 33) sind auf geneigten Montageelementen auf einer Unterlage, insbesondere einer Leiterplatte (29) befestigt
- die Leuchtdioden (31, 32, 33) sind mit einer Unterlage (37) mit gewölbter Oberfläche verbunden,
- es sind optische Ablenkelemente (38) vorgesehen, um Lichtkegel (41, 42, 43) unterschiedlicher Richtungen zu erzeugen.

14. Beleuchtungsvorrichtung gemäß einem der vorstehenden Ansprüche, mit mindestens drei Leuchtdioden (31, 32, 33), **dadurch gekennzeichnet, dass** die Strahlrichtungen der von den Leuchtdioden erzeugten Lichtkegel nicht alle in einer Ebene liegen.

15. Beleuchtungsvorrichtung gemäß einem der vorstehenden Ansprüche, mit mindestens drei Leuchtdioden (31, 32, 33), wobei die Lichtkegel der Leuchtdioden (31, 32, 33) so ausgerichtet sind, dass die von den Lichtkegeln ausgeleuchteten Bereiche in zwei Raumrichtungen verteilt sind, so dass durch Überlagerung der Lichtkegel und Einstellung von Zwischenpositionen das Lichtfeld (9) innerhalb eines zweidimensionalen Schwenkbereichs (46) bewegt werden kann.

16. Verwendung einer Beleuchtungsvorrichtung (1) nach einem der vorherigen Ansprüche als Leseleuchte
- für verstellbare Sitz- oder Liegemöbel, insbesondere für Krankenbetten,
- in Flugzeugen, Schiffen, Zügen, Automobilen oder anderen Fahrzeugen.

## Claims

1. A lighting device (1) comprising a light source arrangement (3) including a plurality of semiconductor-based light sources in the form of light-emitting diodes (31, 32, 33), wherein the light emitted therefrom is bundled in such a way that it forms differently directed light cones (41, 42, 43) which overlap in a light field;
wherein the lighting device (1) comprises an adjustment means (5) for output of an adjustment signal for adjusting the direction of illumination, and a control circuit (7) connected to said adjustment means (5), wherein the adjustment means (5) allows to set intermediate stages at which light-emitting diodes (31, 32, 33) of adjacent and overlapping light cones (41, 42, 43) can be driven by the control circuit (7) jointly and with variable light intensity in such a way that the focus of the light field (9) produced by the light-emitting diodes at the intermediate stages lies between the focuses (410, 420, 430) of adjacent light cones (41, 42, 43);
wherein the light-emitting diodes (31, 32, 33) can be individually driven so as to emit different light intensities, and wherein at least some of the light-emitting diodes (31, 32, 33) are collimated such that at least one of the light cones overlaps both with a second, adjacent light cone and with a third light cone that is adjacent to the second light cone;
wherein at the different intermediate stages, the brightness of the light field remains the same or fluctuates by no more than 20 %, whereby the light sources each emit light into a stationary light cone;
wherein the angle α between the directions of the focuses of the light cones at maximum deflection is 30° to 80°, preferably 35° to 55°;
wherein the lighting device (1) is designed as a recessed light having a front panel (15), wherein the light-emitting diodes (31, 32, 33) are arranged behind said front panel (15) and wherein the front panel is at least partially transparent.

2. The lighting device (1) according to the preceding claim, **characterised in that** the light sources are arranged at a fixed location.

3. The lighting device (1) according to any one of the preceding claims, **characterised by** at least one of the following features:
- the control circuit (7) is configured so as to control the light-emitting diodes (31, 32, 33) in such a way that at the intermediate stages the brightness of the light field (9) remains the same or fluctuates by no more than 10 %;
- the adjustment of the light-emitting diodes (31, 32, 33) is performed in such a way that at the intermediate stages the central brightness or maximum brightness remains the same or fluctuates by no more than 20%, preferably by no more than 10 %.

4. The lighting device according to the preceding claim, **characterised in that** the adjustment means (5) and the control circuit (7) cooperate in such a way that successive actuation of the adjustment means moves the focus (11) of the light field (10).

5. The lighting device according to any one of the preceding claims, **characterised in that** the adjustment means (5) comprises a slider means or a rotary adjustment means (50, 51), wherein the adjustment means (5) and the control circuit (7) cooperate in such a way that different sliding or rotary positions of the slider means or the rotary adjustment means (50, 51) correspond to different illumination directions.

6. The lighting device (1) according to any one of the preceding claims, **characterised in that** the front panel (15) has an operating element (18) integrated therein, which can be used to actuate the adjustment means (5).

7. The lighting device according to any one of the preceding claims, **characterised by** a touch-sensitive operating element (18), preferably a touch-sensitive slider for actuating the adjustment means (5).

8. The lighting device according to any one of the preceding claims, **characterised by** a further adjustment means connected to the control circuit (7) for adjusting the total light intensity emitted by the lighting device (1).

9. The lighting device according to any one of the preceding claims, **characterised in that** the control circuit (7) is configured so as to respond to a change of a control value of the adjustment means (5) by making an adjustment to an intermediate stage with a time delay, such that the brightnesses of the light-emitting diodes (31, 32, 33) are adjusted in a temporally smooth manner or with a plurality of successive intermediate stages.

10. The lighting device according to any one of the preceding claims, **characterised in that** the plurality of light-emitting diodes (31, 32, 33) emit light in a plurality of light cones (41, 42, 43) in different directions, said directions enclosing an angle in the range from 10° to 20°.

11. The lighting device according to any one of the preceding claims, **characterised by** at least one of the following features:
- at least some of the light-emitting diodes (31, 32, 33) are collimated such that the opening angle of the light cones (41, 42, 43) is greater than the angle between the light cones (41, 42, 43);
- at least some of the light-emitting diodes (31, 32, 33) are collimated such that the angle between adjacent light cones (41, 42, 43) is not more than half the opening angle of the light cones (41, 42, 43).

12. The lighting device according to any one of the preceding claims, **characterised in that** for the brightness distribution of the light from one of the light-emitting diodes, preferably all light-emitting diodes (31, 32,33) on a surface (28) illuminated by the lighting device (1) along a line through the brightness maximum of the light distribution, the parameter (W10-W90)/FWHM has a value in the range from 0.5 to 1.6, where W10 is the width of the brightness distribution at 10 % of maximum brightness, W90 is the width of the brightness distribution at 90 % of maximum brightness, and FWHM is the full width at half maximum of the brightness distribution.

13. The lighting device according to any one of the preceding claims, **characterised by** at least one of the following features:
- the light-emitting diodes (31, 32, 33) are mounted on inclined mounting elements on a substrate, in particular a printed circuit board (29);
- the light-emitting diodes (31, 32, 33) are bonded to a substrate (37) that has a curved surface;
- optical deflection elements (38) are provided to produce light cones (41, 42, 43) in different directions.

14. The lighting device according to any one of the preceding claims,
comprising at least three light-emitting diodes (31, 32, 33), **characterised in that** the beam directions of the light cones produced by the light-emitting diodes do not all lie in a single plane.

15. The lighting device according to any one of the preceding claims,
comprising at least three light-emitting diodes (31, 32, 33), wherein the light cones of the light-emitting diodes (31, 32, 33) are aligned such that the areas illuminated by the light cones are distributed in two spatial directions, so that the light field (9) can be moved within a two-dimensional pivoting range (46) by overlapping the light cones and setting intermediate positions.

16. Use of a lighting device (1) according to any one of the preceding claims as a reading light
- for adjustable seating furniture or reclining furniture, in particular for hospital beds;
- in aircraft, ships, trains, automobiles or other vehicles.

## Revendications

1. Dispositif d'éclairage (1) comprenant un agencement de source lumineuse (3) avec plusieurs sources lumineuses à base de semiconducteurs, sous forme de diodes électroluminescentes (31, 32, 33), dont la lumière émise est concentrée de manière à ce qu'elle forme des cônes de lumière (41, 42, 43) à orientations différentes, qui se chevauchent dans un champ lumineux, le dispositif d'éclairage (1) présentant un dispositif de réglage (5), destiné à émettre un signal de réglage pour l'ajustement de la direction d'éclairage, et un circuit d'activation (7) qui est relié au dispositif de réglage (5), le dispositif de réglage (5) permettant d'ajuster des niveaux intermédiaires dans lesquels des diodes électroluminescentes (31, 32, 33) de cônes de lumière (41, 42, 43) adjacents et se chevauchant peuvent être activées ensemble et avec une intensité lumineuse variable par le circuit d'activation (7), de manière à ce que la zone principale du champ lumineux (9) généré par les diodes électroluminescentes se situe pour les niveaux intermédiaires entre les zones principales (410, 420, 430) de cônes de lumière (41, 42, 43) adjacents,
sachant que les diodes électroluminescentes (31, 32, 33) peuvent être activées individuellement pour émettre des intensités lumineuses différentes, et qu'au moins une partie des diodes électroluminescentes (31, 32, 33) est soumise à une collimation telle qu'au moins un des cônes de lumière se chevauche aussi bien avec un deuxième cône de lumière adjacent qu'avec un troisième cône de lumière qui est adjacent au deuxième cône de lumière, la luminosité du champ lumineux restant la même dans les différents niveaux intermédiaires ou variant au maximum de 20 %, ce qui a pour effet que les sources lumineuses émettent de la lumière respectivement dans un cône de lumière immobile, l'angle α entre les directions des zones principales des cônes de lumière à déviation maximale étant de 30° à 80°, de préférence de 35° à 55°, le dispositif d'éclairage (1) étant réalisé comme luminaire encastrable doté d'un panneau frontal (15), les diodes électroluminescentes (31, 32, 33) étant disposées derrière le panneau frontal (15), et le panneau frontal étant transparent au moins en partie.

2. Dispositif d'éclairage (1) selon la revendication précédente, **caractérisé en ce que** les sources lumineuses sont installées de manière fixe.

3. Dispositif d'éclairage (1) selon une des revendications précédentes, **caractérisé en ce qu'**il présente au moins une des caractéristiques suivantes :
- le circuit d'activation (7) est conçu pour activer les diodes électroluminescentes (31, 32, 33) de manière à ce que la luminosité du champ lumineux (9) reste la même dans les niveaux intermédiaires ou varie au maximum de 10 %,
- le réglage des diodes électroluminescentes (31, 32, 33) s'effectue de manière à ce que la luminosité au centre ou luminosité maximale reste la même dans les niveaux intermédiaires ou varie au maximum de 20 %, de préférence au maximum de 10 %.

4. Dispositif d'éclairage selon la revendication précédente, **caractérisé en ce que** le dispositif de réglage (5) et le circuit d'activation (7) coopèrent de manière à ce que suite à un actionnement successif du moyen de réglage, la zone principale (11) du champ lumineux (10) se déplace.

5. Dispositif d'éclairage selon une des revendications précédentes, **caractérisé en ce que** le dispositif de réglage (5) comprend un dispositif d'ajustement coulissant ou tournant (50, 51), le dispositif de réglage (5) et le circuit d'activation (7) coopérant de manière à ce que des positions de coulissement ou de rotation différentes du dispositif d'ajustement coulissant ou tournant (50, 51) correspondent à des dispositifs d'éclairage différents.

6. Dispositif d'éclairage (1) selon une des revendications précédentes, **caractérisé en ce qu'**un élément de commande (18) est intégré dans le panneau frontal (15) et permet d'actionner l'élément de réglage (5).

7. Dispositif d'éclairage selon une des revendications précédentes, **caractérisé par** un élément de commande (18) tactile, de préférence un régulateur à curseur tactile, destiné à actionner l'élément de réglage (5).

8. Dispositif d'éclairage selon une des revendications précédentes, **caractérisé par** un dispositif de réglage supplémentaire relié au circuit d'activation (7) et destiné à régler l'intensité lumineuse totale émise par le dispositif d'éclairage (1).

9. Dispositif d'éclairage selon une des revendications précédentes, **caractérisé en ce que** le circuit d'activation (7) est conçu pour effectuer, en réaction à la variation d'une valeur réglante de l'élément de réglage (5), un ajustement d'une position intermédiaire, avec un temps de retard, de manière à ce que les luminosités des diodes électroluminescentes (31, 32, 33) soient ajustées avec un glissement dans le temps ou avec plusieurs positions intermédiaires successives.

10. Dispositif d'éclairage selon une des revendications précédentes, **caractérisé en ce que** la pluralité de diodes électroluminescentes (31, 32, 33) émet de la lumière dans plusieurs cônes de lumière (41, 42, 43) ayant des directions différentes, sachant qu'un angle compris dans la plage allant de 10° à 20° est formé entre les directions.

11. Dispositif d'éclairage selon une des revendications précédentes, **caractérisé en ce qu'**il présente au moins une des caractéristiques suivantes :
- au moins une partie des diodes électroluminescentes (31, 32, 33) fait l'objet d'une collimation telle que l'angle d'ouverture des cônes de lumière (41, 42, 43) soit plus grand que l'angle entre les cônes de lumière (41, 42, 43),
- au moins une partie des diodes électroluminescentes (31, 32, 33) fait l'objet d'une collimation telle que l'angle entre des cônes de lumière (41, 42, 43) adjacents soit au maximum égal à la moitié de l'angle d'ouverture des cônes de lumière (41, 42, 43).

12. Dispositif d'éclairage selon une des revendications précédentes, **caractérisé en ce que** pour la distribution de luminosité de la lumière de l'une des diodes électroluminescentes (31, 32, 33), de préférence de l'ensemble des diodes électroluminescentes (31, 32, 33), sur une surface (28) éclairée par le dispositif d'éclairage (1), le long d'une ligne passant par le maximum de luminosité de la répartition de lumière, le paramètre (W10-W90)/FWHM présente une valeur comprise dans la plage allant de 0,5 à 1,6, où W10 désigne la largeur de la distribution de luminosité pour 10 % de la luminosité maximale, W90 désigne la largeur de la distribution de luminosité pour 90 % de la luminosité maximale et FWHM désigne la largeur à mi-hauteur de la distribution de luminosité.

13. Dispositif d'éclairage selon une des revendications précédentes, **caractérisé en ce qu'**il présente au moins une des caractéristiques suivantes :
- les diodes électroluminescentes (31, 32, 33) sont fixées à des éléments de montage inclinés, sur un support, notamment une carte de circuit imprimé (29),
- les diodes électroluminescentes (31, 32, 33) sont reliées à un support (37) à surface bombée,
- il est prévu des éléments de déviation optiques (38) pour générer des cônes de lumière (41, 42, 43) ayant des directions différentes.

14. Dispositif d'éclairage selon une des revendications précédentes, comprenant au moins trois diodes électroluminescentes (31, 32, 33), **caractérisé en ce que** les directions de rayonnement des cônes de lumière produits par les diodes électroluminescentes ne se situent pas toutes dans le même plan.

15. Dispositif d'éclairage selon une des revendications précédentes, comprenant au moins trois diodes électroluminescentes (31, 32, 33), les cônes de lumière des diodes électroluminescentes (31, 32, 33) étant orientés de manière à ce que les zones éclairées par les cônes de lumière soient réparties dans deux directions dans l'espace, de sorte que le champ lumineux (9) peut être déplacé à l'intérieur d'une zone de pivotement (46) bidimensionnelle, par chevauchement des cônes de lumière et réglage de positions intermédiaires.

16. Utilisation d'un dispositif d'éclairage (1) selon une des revendications précédentes, en tant que lampe de lecture
- pour des meubles d'assise ou de couchage réglables, en particulier des lits de malade,
- dans des avions, des navires, des trains, des automobiles ou d'autres véhicules.
